# EUROPEAN PATENT SPECIFICATION

(11) **EP 2 215 417 B1**
(45) Date of publication and mention of the grant of the patent: **10.08.2011**
(21) Application number: 08848372.2
(22) Date of filing: 06.11.2008
(51) Int. Cl.: F26B 23/10, F26B 25/06

(54) **SOLAR AND ELECTRIC ENERGY DRYERS**
MIT SONNEN- UND ELEKTRISCHER ENERGIE BETRIEBENE TROCKNER
SÉCHOIRS À ÉNERGIE SOLAIRE ET ÉLECTRIQUE

(30) Priority: 08.11.2007 RS 7044107
(43) Date of publication of application: 11.08.2010
(73) Proprietor: Veselinovic, Nenad, 11030 Beograd (RS); Veselinovic, Milos, 11030 Beograd (RS)
(72) Inventor: Veselinovic, Nenad, 11030 Beograd (RS); Veselinovic, Milos, 11030 Beograd (RS)
(74) Representative: Kjoseska, Marija
(86) International application number: PCT/RS2008/000034
(87) International publication number: WO 2009/061229

(56) References cited:
- EP-A- 1 895 257
- CH-A5- 654 627
- DE-A1- 2 625 072
- DE-A1- 2 915 513
- DE-A1- 19 526 959
- FR-A- 2 445 101
- GB-A- 159 465
- NL-A- 8 303 005
- NL-C- 14 838
- US-A- 1 436 142
- US-A- 1 564 782
- US-A- 2 134 147
- US-A- 4 273 104
- TOPIC R M: "SMALL CAPACITY MOBILE DRYERS FOR DRYING BIOLOGICAL MATERIALS" DRYING TECHNOLOGY, TAYLOR & FRANCIS, PHILADELPHIA, PA, US, vol. 21, no. 6, 1 July 2003 (2003-07-01), pages 1137-1150, XP001167876 ISSN: 0737-3937
- TAYEB A M: "SOLAR-AUGMENTED FOAM-MAT DRYING OF FRUITS" RENEWABLE ENERGY, PERGAMON PRESS, OXFORD, GB, vol. 4, no. 3, 1 April 1994 (1994-04-01), pages 283-289, XP000442123 ISSN: 0960-1481
- MUMBA J: "Development of a photovoltaic powered forced circulation grain dryer for use in the tropics" RENEWABLE ENERGY, PERGAMON PRESS, OXFORD, GB, vol. 6, no. 7, 1 October 1995 (1995-10-01), pages 855-862, XP004048981 ISSN: 0960-1481

## Description

Drying comes into machines for treating various types of cultures in the field of agriculture, and according to the International Patent Classification it belongs to F 26 B.

### TECHNICAL PROBLEM

Problem solved by herewith explained invention is defined as the following: how to dry wholesome, spicy and aromatc herbs, mushrooms, fruits and vegetables and so as to obtain the less possible exhalations prior to the drying process, how to take in the exhalations released into the environment during the process of drying, and how to use precious compounds from mushrooms, herbs, vegetables and fruits and how to use energy of sun with a slight consumption of other energy and how to control the process against overheating and cooling, and with that how to manage the process and control it without making any breaks, how to optimize the process and adjust it to each herb distinctly.

### STATE-OF-ART

Drying remained essentially unchanged, as it consists in the very process of bringing in hot air over the substances for drying and in that way humidity is being taken away and dehydration is carried out. The first dryers functioned by means of smoke: the fire is put and the smoke is directed to the matter intended for drying, then we have dryers wherein hot air, through the fans, is injected either from heat exchangers or from heaters themselves, hence dryers work at lower temperature, and humidity from the matter take away by means of vacuum. Variations only confirm the rule: hot air fluidity by means of the substance from which humidity is taken away.

### SUBJECT-MATTER OF INVENTION

The problem is solved by the invention as defined in claim 1. With regard to the construction of this dryer, the set out problem was on finding the technical solution to enable that the matter is dried and at the same time the primary liquid, which evaporates is collected. Besides this problem, the other set out problem was how to dry different matters that should be dried at different temperatures in a simple way, as much as possible, thus the process of drying remains constant without (breaks or) interruptions and how to equally distribute temperature within drying space: Length of the process depends on the required level of dryness and humidity entered into the space, and not on the duration of drying, as drying depends on the humidity, duration of the process of drying is shortened or prolonged.

Constructional solution of solar and electric energy dryers is set so that solar energy is used for heating fluids, when there is sun, so that the required temperature exists inside the dryer, and when the solar energy is not enough, then electric energy is used for additional heating and that in the following way: a solar panel is set onto the body of the dryer under the latitude angle, diagonal tappings of the solar panel are connected to a singlepipe system for heating fluids, set at the back, or on the roof, of the dryer, being connected to a circulatory pump which, through the pipeline system in the dryer, carries out the forced circulation of fluids. So as to regulate the fluidity of fluids, either from solar panels or only in a dryer, two electromagnetic valves (EMV) that are based on impulse excitation technique, and so as to remove possible pressure jumps within the system there is an expansion dish connected. On the same line there is a sinking in pipe heater, which is set inside the dryer. The whole process is connected by means of a microprocessor, wherein already set the required parameters exist, and it regulates opening and closing of EMV, functioning of the pump, additional heating and cooling inside the dryer. Thereto connected are sensors for measuring temperature and humidity as the following: before the heater a temperature sensor for the fluid going into the heater and a temperature and humidity inside the dryer that follow the whole process of drying, as a temperature sensor in the solar panel. The dryer has a partially insulated opening which turns in a vault toward one side of the dryer, so that for the exhalations inside it, and behind the insulation, condensation starts. To achieve high condensation of steams, onto the pipe that extends laterally from the opening, there is set a cooler, or a compressor behind which is a condenser of exhalations which collects the condensed liquid and directs it to the end of the pipe where condensed liqued goes out. In this way, for the first time at least two products are obtained during drying a dry matter and a primary liquid from which, later on by means of distillation, or in similar procedure, there can be set apart matters exhaled during the process of drying. From the condenser downward extends a conduit pipe taking the vaporless air and it continues to a ventilator which carries forced circulation of air from output pipe to the input pipe, and with all that from the bottom to the top of the dryer itself. If there is set an air cooling compressor, and then below the ventilator the heated fluid from the compressor is connected to heat the air additionally. Thus, a better effectiveness of energy is achieved.

Arrangement of pipes inside the dryer is such that they fill in the space in the dryer: the pipes are set onto the walls of the dryer, and also between the shelves for drying the matter. The pipes go into the bottom part of the dryer, they climb gradually over the walls, a climbing conduit, and then they make a horizontal pipe field over all the space of the dryer so that from one level. When the horizontal pipe field is already formed, they descend and it continues all down to the bottom of the dryer where the process come out of the rear side in a descending conduit, in the area of the tap and they form a single pipe system, whether connected to the solar panel or not. The arrangement of pipes inside the dryer gives a well balanced temperature and a well balanced vaporization of the matter, as the results. Circulation of air through the dryer actually consists of heated air and steam which due to the increase of temperature and increase of the capacity migrate through the pipe, being supported by a ventilator, into the input pipe to the bottom of the dryer, into the dryer itself, and it goes through the spiral for additional heating and the heating panel, hence in contact with the matter it has the temperature required for drying.

These dryers are mobile as they have wheels. At the rear part, there is a carrier of a solar panel which has an indicator for its adusting to the latitude. Tappings of the solar panel are connected onto the dryer through a flexible connection into a single pipe system, while the solar panel itself at the other end has little wheels so that it can be moved together with the dryer.

Drying process, which is set separately for each herbal specie according to its particualr charactersitics, is completely automatical.

This system of regulation of the humidity of the matter enables us to determine with a great accuracy the required humidity, and at the same time it enables production of some products that so far was impossibe to be obtained in standard dryers: dried fruit up to minimal humidity to be grinded for production of powder for food industry, this refers to the mushrooms, wholesome and spicy herbs and vegetables, as well. Herewith explained dryer is already made, and tested and the results obtained during the tasting are above any expectations:

### SHORT DESCRIPTION OF THE FIGURES OF DRAWING

Dryer is given in 11 figures where:

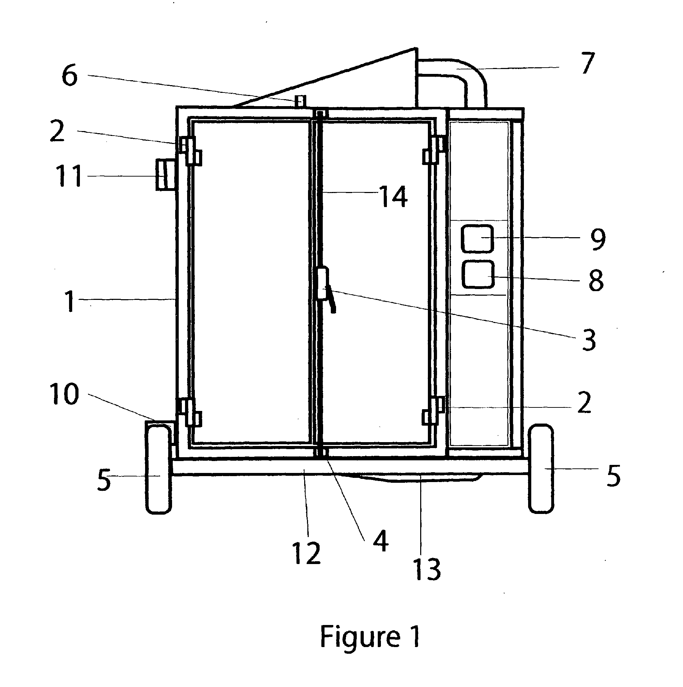

Fig. 1 - dryer as represented from the front side

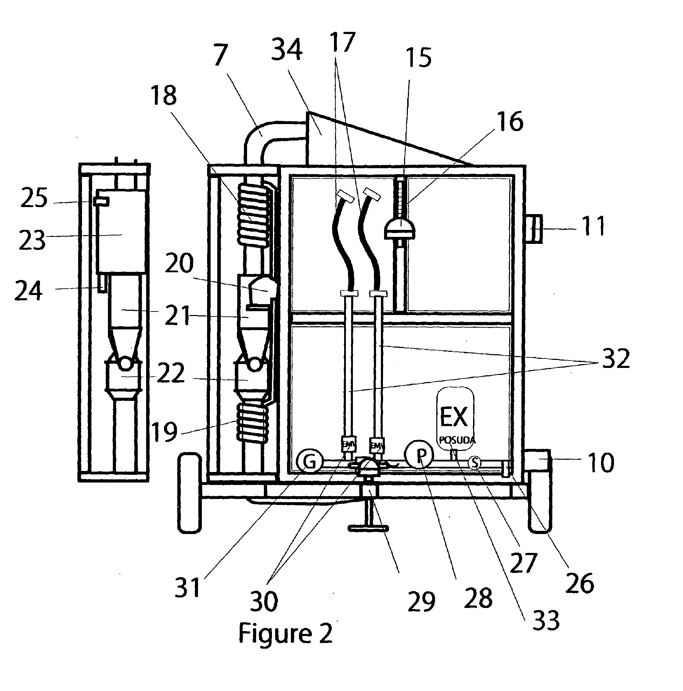

Fig. 2 - dryer as represented from the back

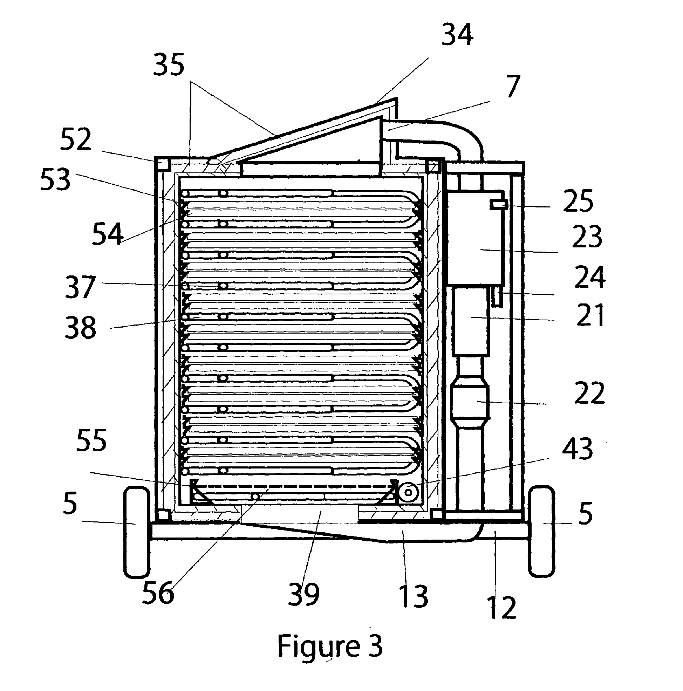

Fig. 3 - longitudinal cross-section along the lateral sides of the dinner

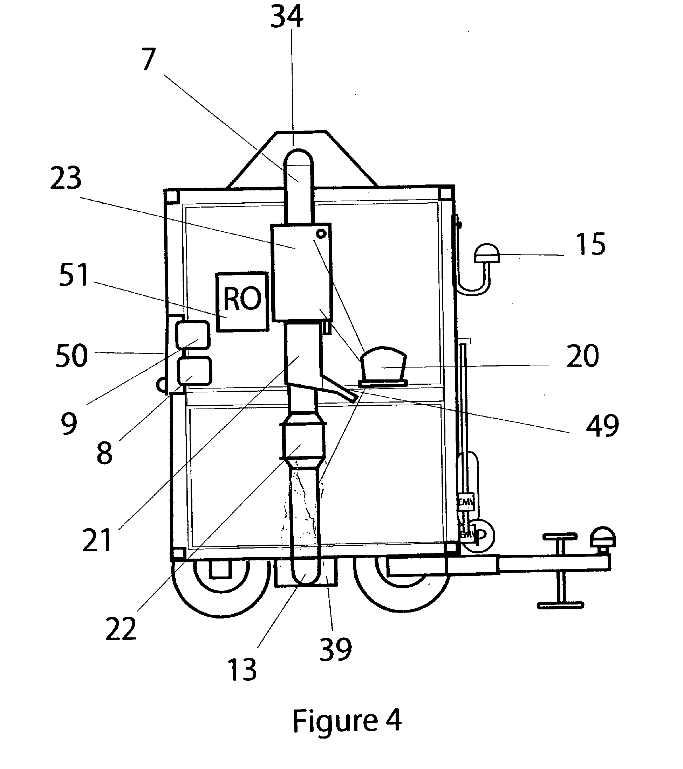

Fig. 4 - lateral side of the dryer

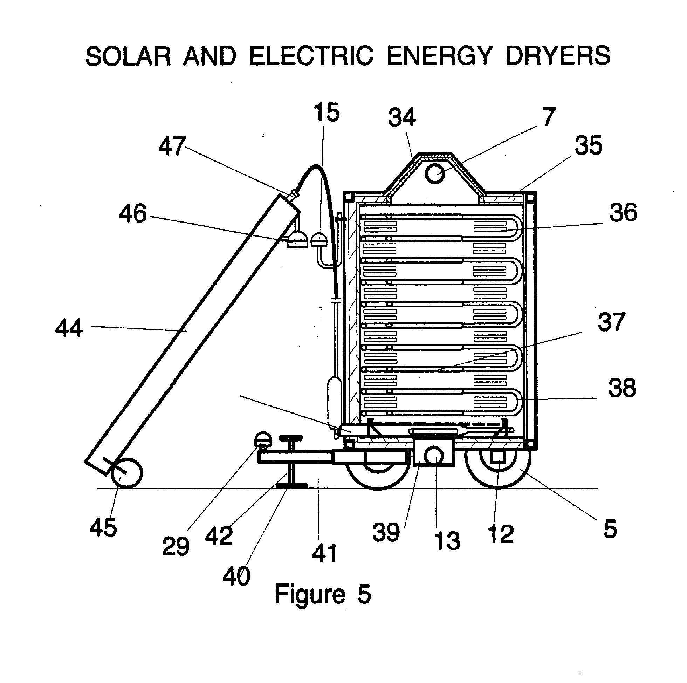

Fig. 5 - longitudinal cross-section along the front and the rear side of the dryer

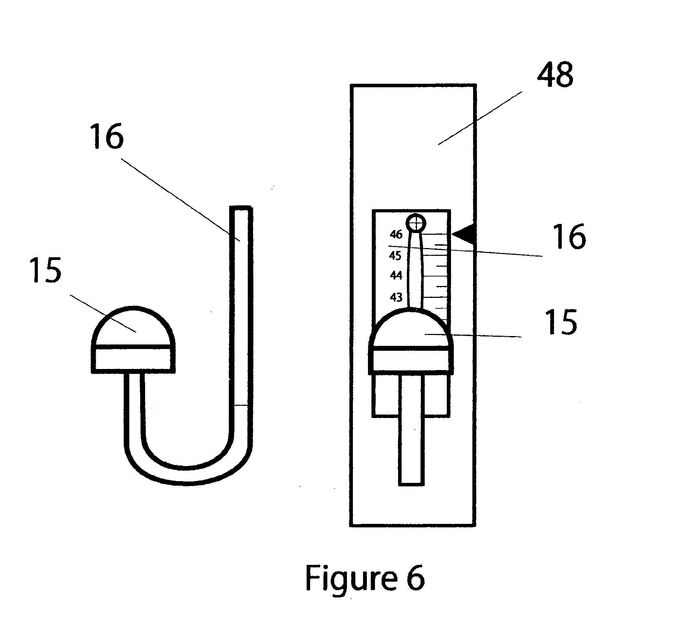

Fig. 6 - a hook to fasten solar panel thereto

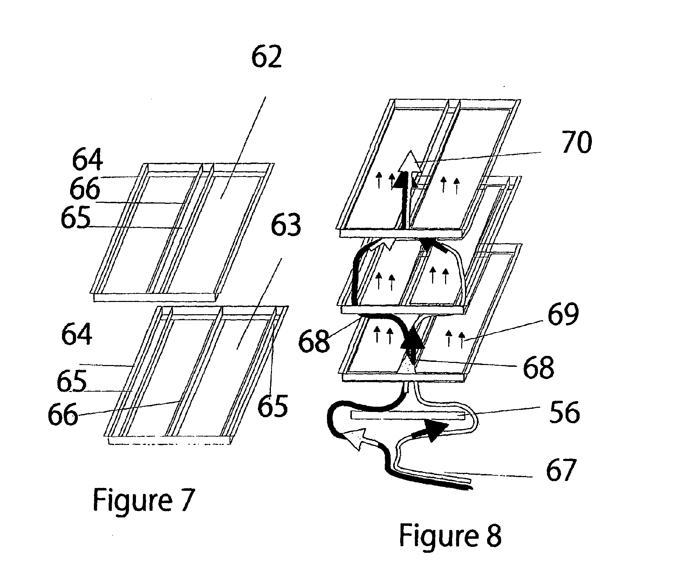

Fig. 7 - shelves
Fig. 8 - layout of air fluidity

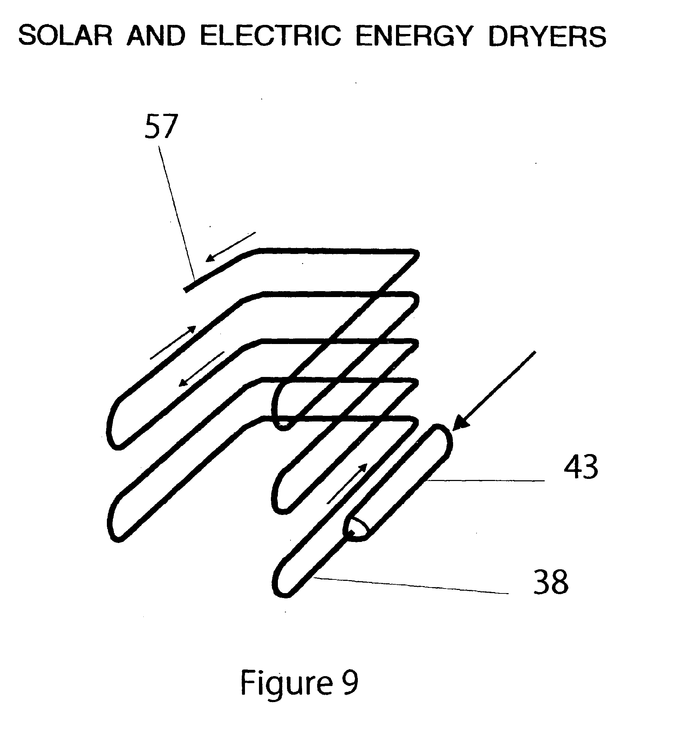

Fig. 9 - layout of the climbing conduit

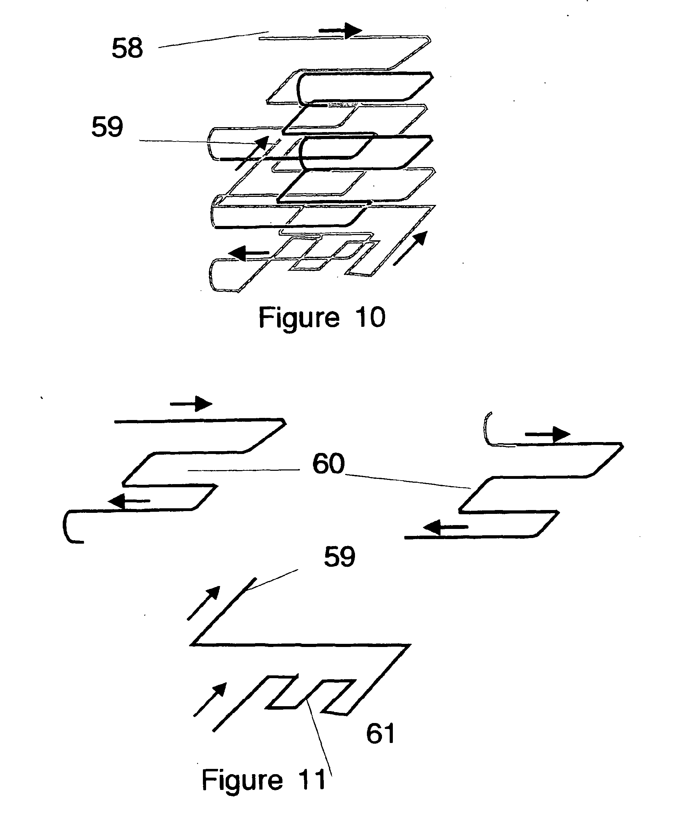

Fig. 10 - layoout of descending conduit
Fig. 11 - parts of descending conduit

### DETAILED DESCRIPTION

Solar and electric energy dryer has a body 1 which is limited by an outer casing whereto set against is insulation 35, while from the internal side there is an interior stainless steel body. From the front side of the dryer, fastened by hinges 2 there is a double door that seal the body 1 of the dryer and thereon set are a lock 3, a rod 14, and the rod carriers 4 so as to close the door of the dryer entirely. The dryer has a shaft 12, whereto fixed are wheels 5, thus making the dryer movable. On the top of the dryer along the centre of the top casing there is an outlet dome 34 achieved, wherefrom extends an outlet pipe 7 laterally upward, and then it bends downward and above the lateral side of the dryer, it descends downward and passes through a cooling tank 23, or the cooling process is done by a cooling spiral 18 which is supplied by a compressor 20, then it continues through a condenser 21 wherein separation of huge steam grown from air is carried out and, in the form of liquid, it goes out through the pipe of condenser 49. Vaporless air is drawn by a ventilator 22 and pushed further through the pipe up to the input pipe 13, taking it into the air introducer 39 and directing onto the spiral 61 for additional heating of the descending duct, and the direction of air inflow 67, and then the heated air is directed to the heating panel 56, which are on the carriers 55, where air is completely heated to working temperature. Further circulation, from the bottom to the top of the dryer, heated air comes to the system of shelves for the material, these are one slot shelves 62 with one aperture, as an air passage, set in the middle of the shelf 54, or two-slot shelves 63 with two apertures as air passage set at the side of the shelf 54, these two-slot shelves at the ends have shelf supports 64 and inside the shelves slots 65 intended for fluidity of air being arranged so that there is a main air passage 68 through the slots 65, which are set alternated: in the centre of the shelf and at the end of the shelf, and secondary passage 69 through the matter, which is scattered for drying all over the surface, thus by warming the whole span of the matter and its exhaling is increased. This is a significant difference in comparison to all the existing dryers where the matter is warmed from the surface and the exhaling from the matter is as much reduced, and the matter itself is longer treated and often exposed to inappropriate temperature. Air and exhalations are exchanged in moving upward toward the top of the dryer where it forms the outflow direction of air 70.

At a suitable spot near the outlet dome 34, on the roof, there is a measuring site, a probe for temperature and humidity 6, extending through the roof and the body 1 of the dryer and hang in the dryer so as to measure humidity and temperature inside the dryer.

At the back of the dryer, at the required height there is set a hook of a solar panel 15 with a graduated scale 16 as to the latitude and the hook is fixed to the hook support 48. Leaned against the hook of the solar panel 15 is a cap of the sphere 46 which is connected to the solar panel 44, and at the bottom part therein inbuilt are casters 45.

Diagonal tappings of the solar panel are connected in a flexible joint or link by means of the hookup or connection 47 of the solar panel and flexible pipes 17 to the pipe system of the dryer meaning to the climbing pipes 32 that descend vertically downward along the rear side of the dryer and on the ending there of there are three electromgnetic valves 30 (hence forward referred also as EMV) and that with two to the solar panel 44, and one for switching off the solar panel 44 from the system. All electromgnetic valves (EMV) 30 employ an electric current pulse or power impulse sensor and independent on the difference of the fluid pressure. Going horizontally along the line thereon is set an expansion container 33 to accept the possible preassure jumps of the fluid. Besides it there is a tap 26 for discharging the fluid and to fill the pipeline in, and in the contiunance to the horizontal line there is a a circulatory pump 28 connected, and before the pump there is a measuring site for temperature sensor 27 and it ends with the sinking-in heater 31 in the pipe of the heater 43 which goes into the body of the dryer and makes a begining of the climbing line 38. Climbing conduit 38 inside the dryer consists of the sides of the dryer horizontally set and at the required distance it climbs up to the above level and all that in the sequence one after the other up to the top of the dryer, and then from the top these become a descending conduit 37 which horizontally fill in the space in the dryer and make a horizontal pipe field 60, thus at the requiered level these descend to the next level and all up to the bottom of the dryer in the same way, making a net inside the dryer and inside gaps wherein are set shelf supports 53 whereon are set shelves 54 and whereto comes the material intended for drying. At the bottom of the dryer there is the descending conduit 37 forms a spiral for additional heating 61 and it goes out from the dryer as the end of the descending line 59 and it continues to the tap 26. The shelf supports 53 are horizontally set onto the internal casing and specially and only onto the lateral sides. Arrangement like this, inside a dryer, provides for a equal vaporization from the material.

From the front side of the dryer next to the door there is a microprocessor 8 which regulates the work of all the components: heating only by means of the solar panel 44, or by means of the heater 31, or a combined heating, opening and closing of (EMV) 30; and this two valves open, one open, one closed and vice-versa, it receives the data from the probe for temperature and humidity 27, and then on the ground of these data, it switches on or switches off the pump 28, the heater 31 and (EMV) 30 as needed, while the fan 22 is permanently switched on, it keeps optimal conditions of functioning in the dryer. Besides the microprocessor 8 there is a display reader 9 which gives the diagram of drying so that the process of drying can be continuously controlled. Display reader saves the data on the processes of drying in up to three years term. Behind the microprocessor 8 on the dryer there is a distribution cabinet 51 for the whole installation of the dryer. Microprocessor 8 and the display reader 9 are protected from the impacts of atmospheric phenomena by means of a cover 50.

At the opposite side, of the dryer, on the body 1 of the dryer there are: a bottom support for the solar panel 10, and at the required height above an upper support for the solar panel 11 and therein is set a solar panel 44 when the dryer 44 is transported.

At the back of the dryer, at its bottom there is a drawing hook 29, being carried by an axle of the hook 41, wherethrough goes downward a vertically downward a worm screw at the end of which there is a base 40 to enable it being supported from the ground.

## Claims

1. Electric and solar energy dryer comprising a body 1, a solar panel (44) connected through flexible pipes (17), a circulatory pump (28), a heater (31), measuring spots to control temperature and humidity, a microprocessor (8) and a single pipe fluid circulation system with a climbing conduit (38) winding the side of the dryer horizontally, and then climbing up to the required height, and then again wind horizontally and all up to the top, and then switching to a descending conduit (237) which along the horizontal forms a horizontal pipe field (60), and then descends a downward to the required height, then forms again a horizontal pipe field (60) and all the way downward alternated to the bottom of the dryer, they go out of it and at the rear side of the dryer it switches into a horizontal pipe which is coupled onto the pipes of the solar panel (44) whereon there are electromagnetic valves (30) which open the required circulatory cycle of fluids by passing through the solar panel (44) or without it, which enables to balance the temperature in the whole cube of the dryer.

2. Solar and electric energy dyer according to claim 1, **characterized in that**, on the top part it has an outlet dome (34) wherefrom goes out a outlet pipe (7), which descends alongside the dryer and around it a cooling tank (23) which has tappings; a supply (24) and a drain (25) of cooling fluid for cooling the evaporation, or a compressor (20) wherefrom goes a cooling spiral (18) and winds the pipe and cools the evaprations (20), and also by means of a spiral (19) for additional heating, it warms dehydrated air, and below it there is a condenser (21) which separates liquid from air and through a pipe of condenser (49) the liquid is drained from the dryer.

3. Solar and electric energy dryer according to Claim 1, **characterized in that** a ventilator (22) pushes air downward through an input pipe (13) which conducts the air into an air introducer (39), which directs it further to a spiral (61) for additional heating and a heating panel (56) so that the air reaches the first shelves of the required temperature.

4. Solar and electric energy dryer according to claim 1, **characterized in that** the fluidity of air in the dryer has an inflow direction (67) which goes through a heating panel (56) and has a main passage (68) through the slots for air (65) on the shelves, and secondary passage (69) through the matter being dried and it is the ouflow direction (70) of air at the top of the outlet dome (34).

5. Solar and electric energy dryer, according to Claim 1, **characterized in that** it has shelves (54) which are one-slot shelves (62) with one free aperture for air in the middle of the shelf (54) and two-slot shelves (63) with two free apertures for air flow on the side, which are alternated inside the dryer one above the other, thus determining direction of air in the dryer.

6. Solar and electric energy dryer, according to Claim 1, **characterized in that** there is a hook (15) of the solar panel for hooking up a solar panel (44) whereon is a graduated scale (16) which marks the latitude and determines the angle of the position of the solar panel (44).

7. Solar and electric energy dryer, according to Claim 1, **characterized in that** it has an axle of a hook (41) where is a drawing hook (29) and a bottom support (10) of the solar panel and a top support (11) solar panel to move the dryer which has wheels (5) and fixes it on the spot for exploitation.

8. Solar and electric energy dryer, according to Claim 1, **characterized in that** it has a system of a spiral (61) for additional heating and heating panels (56) to come to the required temperature.

9. Solar and electric energy dryer, according to Claim 1, **characterized in that**, that by means of a hook (15) of the solar panel and cap of a sphere (46) enables that the solar panel (44) tracks the direction of the sun without moving the dryer.

## Patentansprüche

1. Mit Sonnen-und elektrischer energie betriebene trockner (1), besteht aus Solarpaneel (44), durch flexible Rohre (17), Umwälzpumpe(28), Heizer (31), Mess-Stellen zur Kontrolle der Temperatur und Feuchtigkeit, Mikroprozessor (8) und einzigem Rohr Fluidkreislauf und einem Rohr dass nach oben geht (38) die Seite des Geräts auf der Seite biegend, und dann kommte es zur gewissen Höhe, dann wieder horizontal biegend und dass bis nach oben, dann wechselt es und geht nach unter (37) und zusammen mit den horizontalen Formen bildet es einen horizontalen Rohrlaufbereich (60), dann geht es nach unten bis zu einer gewissen Höhe, um dann wieder eine horizontalen Rohrlaufbereich zu bilden (60)abwechselnd, bis zum Boden des Gerätes, rauskommend vom gleichen auf der hinteren Seite des Gerätes und weiter in das horizontale Rohr die sich mit den Rohren des Solarpaneels verbindet (44), wo es Elektromagnete Ventile gibt /30/ die den Zirkulatorenzyklus der Fluide öffnen, durch das Solarpaneel /44/ oder ohne ihn, dass ein Gleichgewicht ermöglicht auf einer Temperatur der Kammer vom Trockner,

2. Mit Sonnen-und elektrischer energie betriebene trockner, nach Anspruch 1, hat am oberen Teil einen Ausgangsgewölbe (34) von wo das Rohr rauskommt (7), das nach unten geht, der Länge des Gerätes nach und hat einen Kühlungsbehälter (23) mit Verschlüssen; Zufluss (24) und Abfluss (25) des Fluids (Flüssigkeit) zur Kühlung des Dampfes oder Kompressor (20) von wo eine Spirale zur Kühlung fortsetzt (18) und das Rohr biegt sich und macht die Kühlung des Dampfes (20), auch, mit Hilfe der Spirale (19) zum zusätzlichen Heizen , heist die dehydrierte Luft, und unter ihr ist ein Kondensator (21), der die Flüssigkeit von der Kuft trennt und durch ein Rohr vom Kondensator (49) die Flüssigleit aus dem Trockner entwässert.

3. Mit Sonnen-und elektrischer energie betriebene trockner, nach Anspruch 1, wird charakterisiert in dem es einen Ventilator (22) gibt, der die Luft durchführt in der Luftzufuhr (39), und weiter zur Spirale (61) leitet, um ein zusätzliches Heizen der Heizpaneele (56) ermöglicht., so dass die Luft zu den ersten Ebenen mit der gewünschten Temperatur.

4. Mit Sonnen-und elektrischer energie betriebene trockner, nach Anspruch 1, wird charakterisiert damit dass die Luftdurchströmung im Trockner in Eingangsposition ist (67) der durch den Heizungspaneel strömt (56) und einen Hauptdurchgang hat (68) durch die Luftpunkte (65) auf den Regalen und einen zweiten Durchgang (69) durch die Materie die getrocknet wird, und der Luftausgang (70) befindet sich am oberen Teil vom Ausgangsgewölbe (34).

5. Mit Sonnen-und elektrischer energie betriebene trockner, nach Anspruch 1, wird charakterisiert in dem es Regale hat (54) die mit einem Platz sind (62) mit einer Luftöffnung in der mitte des Regals (54) und Regale in zwei Teilen (63) mit freien Öffnungen zur Luftströmung von den Seiten, die sich innen im Gerät wechseln, eine über der anderen und damit wird die Luftrichtung im Gerät bestimmt.

6. Mit Sonnen-und elektrischer energie betriebene trockner, nach Anspruch 1, wird charakterisiert indem es einen Haken hat (15) am Solarpaneel zum Aufbau eines Solarpaneels (44) auf dass es eine Waage gibt mit Aufteilungen (16) die die Länge aufzeichnet und den Winkel der Lage in dem Solarpaneel bestimmt (44).

7. Mit Sonnen-und elektrischer energie betriebene trockner, nach Anspruch 1, wird charakterisiert in dem es eine Achse auf den Haken (41) hat, wo ein Haken zum Ziehen (29) hat und einen Halter auf der Basis (10) des Solarpaneels und einen Halter auf der oberen Seite (11) des Solarpaneels damit das Gerät sich bewegt, mit Hilfe von Rädern die auf das Gerät (5) angebracht sind, und damit es sich auf dem Platz wo es setehen soll anbringen kann.

8. Mit Sonnen-und elektrischer energie betriebene trockner, nach Anspruch 1 wird charakterisiert in dem es ein Spiralsystem (61) hat, zum zusätzlichen Heizen und Heizpaneele (56) zum erreichen der gewünschten Temperatur.

9. Mit Sonnen-und elektrischer energie betriebene trockner, nach Anspruch 1, wird charakterisiert, in dem es, mit Hilfe eines Hakens (15) am Solarpaneel und einen spherischen Deckel (46) die Funktion des Solarpaneels ohne Bewegung des Geräts ermöglicht.

## Revendications

1. Séchoirs à énergie solaire et électrique (1), est composé d'un panneau solaire (44), à travers des tuyaux flexibles (17), une pompe circulaire (28), une chaudière (31), points de mesure pour le contrôle de la température et de l'humidité, microprocesseur (8) et un seul pipeline pour l'écoulement du fluide et un tuyau qui monte (38), pliant le coté de l'appareil horizontalement, et puis arrive à une certaine hauteur et ensuite se replie horizontalement jusqu'au sommet, et après passe vers le bas (37) et ensemble avec les formes horizontales crée un champ horizontal de pipelines (60), ensuite il descend jusqu'à une certaine hauteur, et puis forme à nouveau un champ de pipelines horizontal (60) et jusqu'à la fin, alternativement, jusqu'au fond de l'appareil, ils sortent de l'arrière de l'appareil et continuent dans un tuyau horizontal qui est lié aux tuyaux du panneau solaire (44) où il y a des vannes électromagnétiques /30/ qui ouvrent le cycle circulaire de fluides, passant par le panneau solaire /44/ ou sans lui, ce qui permet l'équilibre de la température dans la chambre de l'appareil de séchage.

2. Séchoirs à énergie solaire et électrique, conforme à la revendication 1, a une sortie (34) d'où sort un tuyau (7), qui descend le long de l'appareil et il y a un réservoir de refroidissement autour (23) avec des bouchons; remplissage (24) et vidange (25) du fluide pour le refroidissement de la vapeur ou un compresseur (20) d'où continue la spirale de refroidissement (18) et le tuyau est plié et refroidit l'évaporation (20), de meme, à l'aide d'une spirale (19) pour un chauffage supplémentaire, réchauffe l'air déshydraté, sous laquelle il y a un condensateur (21) qui sépare le liquide de l'air et à travers un tuyau du condensateur (49) le liquide est drainé de l'appareil de séchage.

3. Séchoirs à énergie solaire et électrique, conforme à la revendication 1, est **caractérisé par** l'existence d'un ventilateur (22) qui ventile l'air vers le bas à travers un tuyau d'entrée (13), qui mène l'air dans l'alimentation en air (39), qui l'oriente ultérieurement vers la spirale (61) afin de permettre un chauffage supplémentaire et un panneau de chauffage (56), de la sorte que l'air atteigne les premiers niveaux avec la température désirée.

4. L'appareil de séchage à énergie solaire et électrique, conforme à la revendication 1, est **caractérisé par** le flux d'air dans l'appareil est dans la direction d'entrée (67), qui passe par le panneau de chauffage (56) et a un passage principal (68) à travers les points d'air (65) sur les étagères et un deuxième passage (69) à travers la matière à sécher, alors que la sortie d'air (70) se trouve sur la partie supérieure la sortie (34).

5. Séchoirs à énergie solaire et électrique, conforme à la revendication 1, est **caractérisé par** l'existence d'étagères (54) qui ont un lieu (62) avec un trou d'air au milieu de l'étagére (54) et des étagères en deux parties (63) avec des trous libres pour le flux d'air des cotés, qui changent dans l'intérieur de l'appareil, l'une au dessus de l'autre de la sorte qu'elles orientent l'air dans l'appareil.

6. Séchoirs à énergie solaire et électrique, conforme à la revendication 1, est **caractérisé par** l'existence d'un crochet (15) sur le panneau solaire pour l'installation du panneau solaire (44) sur lequel il y a des divisions (16) qui indiquent la longueur et déterminent l'angle de la position du panneau solaire (44).

7. Séchoirs à énergie solaire et électrique, conforme à la revendication 1, est **caractérisé par** un axe du crochet (41), où il y a un crochet de remorquage (29) et un stand de la base (10) du panneau solaire et un stand du coté supérieur (11) du panneau solaire pour que l'appareil soit en mesure d'être déplacé à l'aide des roues montés sur l'appareil (5) et d'être fixé à un lieu précis où il sera utilisé.

8. Séchoirs à énergie solaire et électrique, conforme à la revendication 1, est **caractérisé par le fait qu'**il contient un système de spirales (61) pour un réchauffement supplémentaire et des panneaux de chauffage (56) afin d'atteindre la température désirée.

9. Séchoirs à énergie solaire et électrique, conforme à la revendication 1, est **caractérisé par le fait que**, à l'aide du crochet (15) du panneau solaire et une couverture sphérique (46), on permet le fonctionnement du panneau solaire sans bouger l'appareil de séchage.
